# EUROPEAN PATENT APPLICATION

(11) **EP 4 521 792 A1**
(43) Date of publication of application: **12.03.2025**
(21) Application number: 23814911.6
(22) Date of filing: 09.05.2023
(51) Int. Cl.: H04W 8/24

(54) **INFORMATION TRANSMISSION METHOD AND APPARATUS, STORAGE MEDIUM, AND ELECTRONIC DEVICE**

(30) Priority: 31.05.2022 CN 202210612502
(71) Applicant: ZTE CORPORATION, Shenzhen, Guangdong 518057 (CN)
(72) Inventor: LU, Zhaohua, Shenzhen, Guangdong 518057 (CN); LIU, Kun, Shenzhen, Guangdong 518057 (CN); ZHENG, Guozeng, Shenzhen, Guangdong 518057 (CN); XIAO, Huahua, Shenzhen, Guangdong 518057 (CN)
(74) Representative: Chimini, Francesco
(86) International application number: PCT/CN2023/093064
(87) International publication number: WO 2023/231725

(57) **Abstract**

Embodiments of the present invention provide an information transmission method and apparatus, a storage medium, and an electronic device. The method includes: receiving first functional module information, wherein the first functional module information includes at least one of the following: an index of a functional module, storage location information of the functional module, version information of the functional module, and specific information of the functional module.

## Description

### Technical Field

Embodiments of the present invention relate to the field of communications, and in particular, to an information transmission method and apparatus, storage medium, and electronic device.

### Background

The rapidly emerging application requirements in smart cities, smart transportation, smart industrial production, etc. have led to the continuous strengthening of the development trend of differentiated network device capabilities, diversified network functions, and intelligent network control, thereby further promoting the arrival of the 6th Generation Mobile Communication System (6G) of the intelligent connection of all things. In typical 6G application scenarios represented by smart cities, smart transportation, and smart homes, there are a large number of intelligent automation devices with highly differentiated capabilities, and the communication requirements for extremely low delay, extremely high reliability, ultra-large bandwidth, and massive access are becoming more and more stringent. Intelligent automation applications also put forward the requirements for high-precision and high-resolution of sensing capabilities. On the one hand, the surge in the number of wireless communication and sensing devices has made the contradiction between the endless growth of service requirements and limited wireless resources and computing power more prominent; and on the other hand, the realization of the vision of 6G requires closed-loop information flow processing from the acquisition of environmental sensing information, information interaction and sharing, intelligent information processing, to layer-by-layer distribution of control information (including control information of communication networks and control commands for application execution devices). Existing wireless network architectures and related technologies can hardly meet the emerging application requirements in the post-5G (5G and Beyond (B5G))/6G era. There is an urgent need to develop new network architectures and enabling technologies that efficiently utilize research and development resources and intelligently adapt to differentiated applications.

In the case that 6G realizes the integration and symbiosis of communication and sensing capabilities under the empowerment of intelligent computing technology, it will enable a 6G network to intelligently sense the physical world and mirror the digital world at all times and in all places. The massive new intelligent terminals connected will rely on the ever-increasing computing power to learn, communicate, cooperate and compete, so as to realize the self-learning, self-operation and self-maintenance of the network, and then realize the vision of a 6G communication, sensing and computing integrated network.

No solution has yet been proposed for the problem of a solution of how a first node (for example, a terminal) acquires functional module information in the related art.

### Summary

Embodiments of the present invention provide an information transmission method and apparatus, a storage medium, and an electronic device to at least solve the problem of a solution of how a first node (for example, a terminal) acquires functional module information applicable to the first node in the related art.

According to an embodiment of the present invention, an information transmission method is provided, including: receiving first functional module information. The first functional module information includes at least one of the following: an index of a functional module, storage location information of the functional module, version information of the functional module, and specific information of the functional module.

According to another embodiment of the present invention, an information transmission method is further provided, including: sending a functional module update request to a third node or a second node. The functional module update request includes at least one of the following: functional module information that needs to be updated; and requirement information updated by a first node.

According to another embodiment of the present invention, an information transmission method is further provided, including: sending second functional module information. The second functional module information includes at least one of the following: update information relative to a reference functional module, and reference functional module information. The reference functional module information includes at least one of the following: index information of the reference functional module, version information of the reference functional module, and storage location information of the reference functional module.

According to another embodiment of the present invention, an information transmission method is further provided, including: sending, by a first node, at least one piece of third functional module information. The third functional module information includes at least one of the following: a function implemented by a functional module; input information required by the functional module; output information of the functional module; and information on whether the functional module is enabled.

According to another embodiment of the present invention, an information transmission apparatus is further provided, including: a first receiving module, configured to receive first functional module information. The first functional module information includes at least one of the following: an index of a functional module, storage location information of the functional module, version information of the functional module, and specific information of the functional module.

According to another embodiment of the present invention, an information transmission apparatus is further provided, including: a first sending module, configured to send a functional module update request to a third node or a second node. The functional module update request includes at least one of the following: functional module information that needs to be updated; and requirement information updated by a first node.

According to another embodiment of the present invention, an information transmission apparatus is further provided, including: a second sending module, configured to send second functional module information. The second functional module information includes at least one of the following: update information relative to a reference functional module, and reference functional module information. The reference functional module information includes at least one of the following: index information of the reference functional module, version information of the reference functional module, and storage location information of the reference functional module.

According to another embodiment of the present invention, an information transmission apparatus is further provided, including: a third sending module, configured to send at least one piece of third functional module information. The third functional module information includes at least one of the following: a function implemented by a functional module; input information required by the functional module; output information of the functional module; and information on whether the functional module is enabled.

According to still another embodiment of the present invention, a computer-readable storage medium is provided, in which a computer program is stored. The computer program is configured to perform, when executing, the steps of any of the above method embodiments.

According to still another embodiment of the present invention, an electronic device is provided, including a memory and a processor. The memory stores a computer program, and the processor is configured to run the computer program, so as to execute the steps of any of the above method embodiments.

Through the present invention, the first functional module information is received. The first functional module information includes at least one of the following: the index of the functional module, the storage location information of the functional module, the version information of the functional module, and the specific information of the functional module. By adopting the above technical solution, the problem that the solution of how the first node (for example, the terminal) acquires the functional module information has not yet been proposed in the related art is solved. Then, the first node acquires the functional module information through interaction with the second node or the third node.

### Brief Description of the Drawings

Fig. 1 is a block diagram of a hardware structure of a mobile terminal of an information transmission method according to an embodiment of the present invention.
Fig. 2 is a flowchart of an information transmission method according to an embodiment of the present invention.
Fig. 3 is another flowchart of an information transmission method according to an embodiment of the present invention.
Fig. 4 is still another flowchart of an information transmission method according to an embodiment of the present invention.
Fig. 5 is still another flowchart of an information transmission method according to an embodiment of the present invention.
Fig. 6 is a schematic flowchart according to an optional embodiment 1 of the present invention.
Fig. 7 is a schematic flowchart according to an optional embodiment 2 of the present invention.
Fig. 8 is a schematic flowchart according to an optional embodiment 3 of the present invention.
Fig. 9 is a schematic flowchart according to an optional embodiment 4 of the present invention.
Fig. 10 is a schematic flowchart according to an optional embodiment 5 of the present invention.
Fig. 11 is a structural block diagram of an information transmission apparatus according to an embodiment of the present invention.
Fig. 12 is another structural block of an information transmission apparatus according to an embodiment of the present invention.
Fig. 13 is still another structural block of an information transmission apparatus according to an embodiment of the present invention.
Fig. 14 is still another structural block of an information transmission apparatus according to an embodiment of the present invention.

### Detailed Description of the Embodiments

Embodiments of the present invention are described below with reference to the drawings and in conjunction with the embodiments in detail.

It is to be noted that terms "first", "second" and the like in the description, claims and the above drawings of the present invention are used for distinguishing similar objects rather than describing a specific sequence or a precedence order.

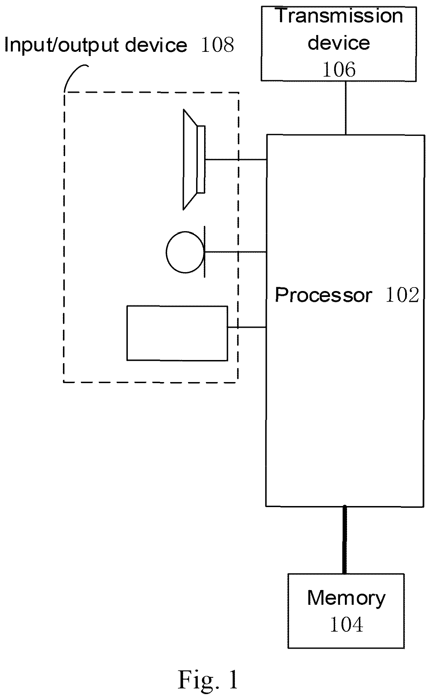

The method embodiment provided by the embodiments of the present invention may be implemented in a mobile terminal, a computer terminal or a similar computing apparatus. Taking running on the mobile terminal as an example, Fig. 1 is a block diagram of a hardware structure of a mobile terminal of an information transmission method according to an embodiment of the present invention. As shown in Fig. 1, the mobile terminal may include one or more (only one is shown in Fig. 1) processors 102 (the processor 102 may include, but is not limited to, a processing apparatus such as a Micro Controller Unit (MCU) or a Field Programmable Gate Array (FPGA)) and a memory 104 for storing data. The above mobile terminal may further include a transmission device 106 and an input/output device 108 for communication functions. Those of ordinary skill in the art may understand that the structure shown in Fig. 1 is only schematic and not intended to limit the structure of the above mobile terminal. For example, the mobile terminal may further include more or fewer components than shown in Fig. 1, or has a different configuration from that shown in Fig. 1.

The memory 104 may be configured to store a computer program, for example, a software program and a module of application software, for example, a computer program corresponding to the information transmission method in the embodiments of the present invention. The processor 102 runs the computer program stored in the memory 104, thereby executing various functional applications and data processing, namely implementing the above method. The memory 104 may include a high speed Random Access Memory and may further include a non-volatile memory such as one or more magnetic storage apparatuses, a flash memory, or other non-volatile solid state memories. In some examples, the memory 104 may further include memories remotely located relative to the processor 102, which may be connected to the mobile terminal over a network. The examples of such networks include, but are not limited to, the Internet, the Intranet, local area networks, mobile communication networks, and combinations thereof.

The transmission module 106 is configured to receive or send data via a network. A specific example of the network may include a wireless network provided by a communication provider of the mobile terminal. In one example, the transmission device 106 includes a Network Interface Controller (NIC) that may be connected to other network devices through a base station to communicate with the Internet. In one example, the transmission device 106 may be a Radio Frequency (RF) module, for communicating with the Internet wirelessly.

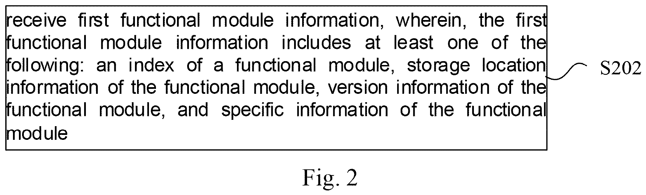

In this embodiment, an information transmission method running on the above mobile terminal is provided. Fig. 2 is a flowchart of an information transmission method according to an embodiment of the present invention. As shown in Fig. 2, the flow includes the following step.

At S202, first functional module information is received. The first functional module information includes at least one of the following: an index of a functional module, storage location information of the functional module, version information of the functional module, and specific information of the functional module.

It is to be noted that the specific information of the functional module includes: information about the functional module may be directly constructed through the specific information.

Through the present invention, the first functional module information is received. The first functional module information includes at least one of the following: the index of the functional module, the storage location information of the functional module, the version information of the functional module, and the specific information of the functional module. By adopting the above technical solution, the first node may receive the functional module information. By adopting the above technical solution, the problem that a solution of how the first node (for example, the terminal) acquires the functional module information has not yet been proposed in the related art is solved. Then, the first node acquires the functional module information through interaction with a second node or a third node.

It is to be noted that in the embodiment of the present invention and the following embodiments, the first node may be understood as the terminal, and the second node may be understood as a Transmission and Reception Point (TRP). (1) The third node and the second node may be in the same entity, or in different entities.

(2) One third node may correspond to a plurality of second nodes, that is, the third node may exchange information with the plurality of second nodes.

(3) The third node may be an Artificial Intelligence (AI) server, or an Al storage device, or a node having a database/server/storage function.

After receiving requirement information, the second node or the third node needs to analyze the requirement information to determine the requirement of the first node, and then send the functional module information applicable to the first node to the first node.

In the above S202, an optional implementation is further provided, including: sending the requirement information to the third node; and receiving the first functional module information applicable to the first node sent by the third node or the second node.

In an embodiment, the method further includes: the requirement information includes at least one of the following: location distribution information of the first node; type information of the first node; basic information of the first node; communication configuration information supported by the first node; a peak transmission rate requirement of a data transmission requirement; a transmission delay requirement of the data transmission requirement; a service type of the data transmission requirement; a transmission time distribution of the data transmission requirement, where the basic information of the first node may specifically include hardware and software composition information of the terminal in the embodiment of the present invention; and required first functional module information. The required first functional module information includes at least one of the following: an index of a required functional module, storage location information of the required functional module, version information of the required functional module, and specific information of the functional module.

In an embodiment, sending the requirement information to the third node includes at least one of the following: directly sending the requirement information to the third node; and sending the requirement information to the second node, and sending the requirement information to the third node through the second node.

In an embodiment, in the process of sending the requirement information to the TRP and sending the requirement information to an Al server through the TRP, the method further includes at least one of the following: sending, by the TRP, part of the requirement information; and modifying (or updating), by the TRP, some or all of the requirement information, and sending the modified (updated) requirement information to the Al server. In the case that only part of the requirement information is modified (or updated), part of the requirement information that is not modified (or updated) is also sent to the Al server.

In an embodiment, the method further includes: implementing communication between the second node and the first node through the functional module of the first node downloaded by the second node from the third node.

In an embodiment, the first functional module information applicable to the first node includes at least one of the following: an index of at least one functional module applicable to the first node; storage location information of at least one functional module applicable to the first node; and version information of at least one functional module applicable to the first node.

Optionally, the TRP re-selects the functional module information applicable to the terminal selected by the Al server, and selects one or more functional module information applicable to the terminal to be sent to the terminal.

In an embodiment, after receiving the first functional module information applicable to the first node sent by the third node or the second node, the method further includes: sending first indication information to the third node or the second node. The first indication information includes at least one of the following: functional module information used by the first node. The first functional module information used by the first node may include some or all of the first functional module information applicable to the first node sent by the third node or the second node; and enable time information of the functional module used by the first node.

In an embodiment, the method further includes: in a case where the second node receives the first indication information, downloading, by the second node, the functional module used by the first node from the third node.

In an embodiment, the method further includes: in a case where the first node determines that the downloaded functional module is not applicable to the first node, sending request information to the second node or the third node to request the functional module applicable to the first node. The request information includes at least one of the following: functional module information required by the first node; available functional module information received by the first node; and enable time information of the available functional module received by the first node.

In an embodiment, after receiving the first functional module information, the method further includes at least one of the following: downloading the functional module according to the received first functional module information; and sending functional module information used by the first node to the third node or the second node. The functional module information used by the first node includes at least one of the following: version information of the functional module, index information of the functional module, and effective time information of the functional module.

In an embodiment, the method further includes: sending fourth functional module requirement information to the third node or the second node; and receiving the functional module information indicated by the fourth functional module requirement information sent by the third node or the second node.

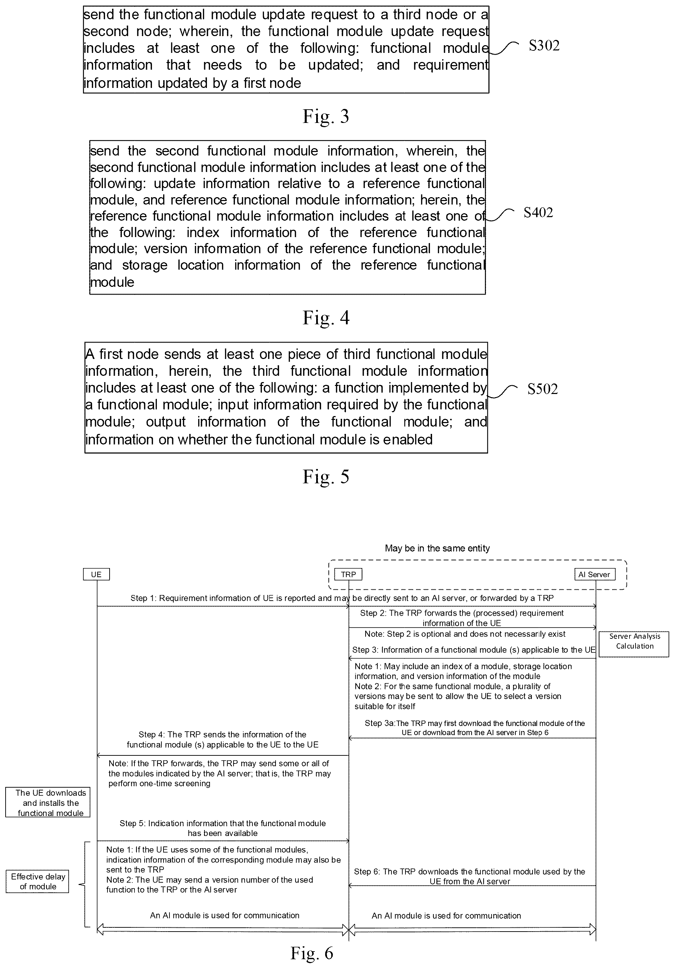

In this embodiment, an information transmission method is provided. Fig. 3 is another flowchart of an information transmission method according to an embodiment of the present invention. As shown in Fig. 3, the flow includes the following step.

At S302, a functional module update request is sent to a third node or a second node. The functional module update request includes at least one of the following: functional module information that needs to be updated; and requirement information updated by a first node.

Through the present invention, the functional module update request is sent to the third node or the second node. The functional module update request includes at least one of the following: the functional module information that needs to be updated; and the requirement information updated by the first node. By adopting the above technical solution, the problem that the second node or the third node cannot know the functional module that needs to be updated of the first node in the related art is solved. Then, through interaction with the second node or the third node, the functional module update request is sent to the second node or the third node.

In an embodiment, after the functional module update request is sent to the third node or the second node, the method further includes at least one of the following: receiving functional module update information sent by the second node or the third node; and downloading an updated functional module according to the functional module update information.

In an embodiment, after downloading the updated functional module according to the functional module update information, the method further includes: sending indication information that the functional module has been updated to the third node or the second node.

In an embodiment, downloading the updated functional module according to the functional module update information includes at least one of the following: directly downloading the updated functional module according to the functional module update information; updating the functional module according to the functional module update information, and deleting a legacy functional module that implements the same function as the updated functional module; and in the case that the local storage space of the first node is insufficient to download the updated module, deleting some modules in the local storage space first, and after the first node completes the update of the functional module, determining, according to the local storage space, whether to download the updated functional module according to the functional module update information.

In an embodiment, after sending the functional module update request to the third node or the second node, the method further includes: receiving some other functional modules sent by the third node; and after the module of the first node is updated, determining whether to download the previously deleted legacy functional module from the third node according to whether the local storage space of the first node is sufficient.

In this embodiment, an information transmission method is provided. Fig. 4 is still another flowchart of an information transmission method according to an embodiment of the present invention. As shown in Fig. 4, the flow includes the following step.

At S402, second functional module information is sent. The second functional module information includes at least one of the following: update information relative to a reference functional module, and reference functional module information. The reference functional module information includes at least one of the following: index information of the reference functional module, version information of the reference functional module, and storage location information of the reference functional module.

Through the present invention, the second functional module information is sent. The second functional module information includes at least one of the following: the update information relative to the reference functional module, and the reference functional module information. The reference functional module information includes at least one of the following: the index information of the reference functional module, the version information of the reference functional module, and the storage location information of the reference functional module. By adopting the above technical solution, the problem that a second node or a third node cannot know the second functional module information in the related art is solved. Then, through interaction with the second node or the third node, the functional module information is sent to the second node or the third node.

In an embodiment, the reference functional module is a functional module stored in the third node or the second node; or, the reference functional module is a functional module sent by a first node to the third node or the second node.

In an embodiment, when the reference functional module information is the index information of the reference functional module and/or the version information of the reference functional module, the reference functional module is a functional module pre-stored in an Al server or a TRP.

In an embodiment, when the reference functional module information includes the storage location information of the reference functional module, the Al server or the TRP needs to download the corresponding reference functional module at a storage location.

In an embodiment, when the reference functional module information includes the storage location information of the reference functional module, it may further include the index information of the reference functional module and/or the version information of the reference functional module. The Al server or the TRP needs to download the reference functional module corresponding to the index information of the reference functional module and/or the version information of the reference functional module at the storage location.

In an embodiment, the first node is a first-type terminal, and the first-type terminal includes at least one of the following:
a terminal registered, authorized, or authenticated in the third node or the second node; and
a terminal that is allowed to send the functional module information by the third node or the second node.

In an embodiment, after sending the second functional module information, the method further includes: after the third node or the second node acquires the functional module according to the functional module information, storing or updating, by the third node or the second node, the functional module locally.

In this embodiment, an information transmission method is provided. Fig. 5 is still another flowchart of an information transmission method according to an embodiment of the present invention. As shown in Fig. 5, the flow includes the following step.

At S502, a first node sends at least one piece of third functional module information. The third functional module information includes at least one of the following: a function implemented by a functional module; input information required by the functional module; output information of the functional module; and information on whether the functional module is enabled.

Through the present invention, the first node sends at least one piece of the third functional module information. The third functional module information includes at least one of the following: the function implemented by the functional module; the input information required by the functional module; the output information of the functional module; and the information on whether the functional module is enabled. By adopting the above technical solution, the problem that a second node or a third node cannot know the third functional module information in the related art is solved. Then, through interaction with the second node or the third node, the functional module information is sent to the second node or the third node.

In an embodiment, the first node is a second-type terminal, and the second-type terminal includes at least one of the following: a terminal registered, authorized, or authenticated in the third node or the second node; and a terminal that is allowed to send the functional module information by the third node or the second node.

In an embodiment, the terminal 1 is a terminal registered/authorized/authenticated in an Al server or a TRP. At the same time, the terminal 1 stores four sets of models of uplink data channel functional modules, numbered as models 1, 2, 3 and 4, respectively, corresponding to different performance indicators, as shown in Table 1 below.

**Table 1**

| Model number | Data Rate | Jamming intensity to neighboring cell | Power consumption |
|---|---|---|---|
| Model 1 | Low | Low | Low |
| Model 2 | Medium | Low | Low |
| Model 3 | High | Medium | Medium |
| Model 4 | Extremely high | Medium | High |

The terminal 1 reports the performance indicators of the above four models, the input information that needs to be provided by the Al server or the TRP, and the output information that can be provided by each model to the Al server or the TRP. The Al server or the TRP selects one model from the four models as the model of the uplink data channel functional module. In this embodiment, the model 2 is selected, and the Al server or the TRP notifies the terminal 1 of the selection of the model 2. After receiving this information, the terminal 1 uses the model 2 as the model of the uplink data channel functional module to send uplink data.

In an embodiment, the first node converts the functional module in a non-enabled state to an enabled state when a first condition is satisfied, and the first condition includes at least one of the following: information sent by the third node or the second node for requesting the terminal to enable the functional module is received; and the functional module information sent by the first node includes a condition enabling the functional module, and the current moment satisfies the enabling condition.

In an embodiment, the terminal 1 is a terminal registered/authorized/authenticated in the Al server or the TRP. At the same time, the terminal 1 stores four sets of models of uplink data channel functional modules, numbered as models 1, 2, 3 and 4, respectively, corresponding to different performance indicators, as shown in Table 2 below.

**Table 2**

| Model number | Data Rate | Jamming intensity to neighboring cell | Power consumption | Enable or not |
|---|---|---|---|---|
| Model 1 | Low | Low | Low | Yes |
| Model 2 | Medium | Low | Low | Yes |
| Model 3 | High | Medium | Medium | Yes |
| Model 4 | Extremely high | Medium | High | No |

The terminal 1 reports the performance indicators of the above four models, the input information that needs to be provided by the Al server or the TRP, and the output information that can be provided by each model to the Al server or the TRP. The Al server or the TRP selects one model from the three enabled models as the model of the uplink data channel functional module. In this embodiment, the model 2 is selected, and the Al server or the TRP notifies the terminal 1 of the selection of the model 2. After receiving this information, the terminal 1 uses the model 2 as the model of the uplink data channel functional module to send the uplink data.

When the number of terminals in a network increases and uplink channel resources are tight, the Al server or the TRP sends the request information to the terminal 1 to request to enable the model 4. After receiving the request information, the terminal 1 enables the model 4 and sends indication information of enabling the model 4 to the Al server or the TRP. After receiving the indication information, the Al server or the TRP provides input parameters for the terminal 1 based on input parameters required by the model 4, and then the terminal 1 sends the uplink data according to the model 4.

In an embodiment, at least one piece of the functional module information sent by the first node corresponds to some of the functional modules supported by the first node.

In an embodiment, the first node sends the third functional module information to the third node or the second node when a second condition is satisfied. The second condition includes at least one of the following.

Request information sent by the third node or the second node is received, and the first node has a functional module that satisfies the requirement of the request information in the functional modules not sent to the third node or the second node.

In an embodiment, the terminal 1 is a terminal registered/authorized/authenticated in the Al server or the TRP. At the same time, the terminal 1 stores four sets of models of uplink data channel functional modules, numbered as models 1, 3, 3 and 4, respectively, corresponding to different performance indicators, as shown in Table 3 below.

**Table 3**

| Model number | Data Rate | Jamming intensity to neighboring cell | Power consumption | Enable or not |
|---|---|---|---|---|
| Model 1 | Low | Low | Low | Yes |
| Model 2 | Medium | Low | Low | Yes |
| Model 3 | High | Medium | Medium | Yes |
| Model 4 | Extremely high | Medium | High | Yes |

The terminal 1 reports performance indicators of the models 1, 2 and 3, the input information that needs to be provided by the Al server or the TRP, and the output information that can be provided by each model to the Al server or the TRP. The Al server or the TRP selects one model from the three enabled models as the model of the uplink data channel functional module. In this embodiment, the model 2 is selected, and the Al server or the TRP notifies the terminal 1 of the selection of the model 2. After receiving this information, the terminal 1 uses the model 2 as the model of the uplink data channel functional module to send the uplink data.

When the number of terminals in the network increases and the uplink channel resources are tight, the Al server or the TRP sends the request information. The request information includes: a need to support an extremely high data transmission rate; and a medium-level jamming intensity to a neighboring cell.

After receiving the request information, the terminal 1 reports the performance indicators of the model 4, the input information that needs to be provided by the Al server or the TRP, and the output information that can be provided by each model to the Al server or the TRP. After receiving the information sent by the terminal 1, the Al server or the TRP notifies the terminal 1 that the model 4 is enabled and provides input parameters required by the model 4 for the terminal 1, and then the terminal 1 sends the uplink data according to the model 4.

In order to better understand the above information transmission method, the embodiments of the present invention further provide several optional embodiments to explain the above solutions.

Optional embodiment 1: User Equipment (UE) triggers configurations of a functional module, and a version of the functional module exactly matches functions of the UE.

In the embodiment of the present invention, a wireless communication system has three components, namely, a terminal (UE), a TRP, and an Al server. The TRP and the Al server may be located in the same entity or in different entities, respectively.

Fig. 6 is a schematic flowchart according to an optional embodiment 1 of the present invention, as shown in Fig. 6, the method includes the following steps.

At S1, requirement information of UE is reported and may be directly sent to the Al server, or forwarded to the Al server by the TRP. The requirement information includes at least one of the following:
location distribution information of the terminal;
type information of the terminal;
basic information of the terminal, specifically including hardware and software composition information of the terminal;
communication configuration information supported by the terminal, specifically including: communication frequency domain resource information; frame structure information; transmitting power information; supported wireless communication protocol information; supported channel coding information; supported source coding information; a supported Multiple Input Multiple Output (MIMO)processing manner; a supported receiver detection algorithm, and the like;
a peak transmission rate requirement of a data transmission requirement;
a transmission delay requirement of the data transmission requirement;
a service type of the data transmission requirement; and
a transmission time distribution of the data transmission requirement.

At S2, in the case that the TRP needs to forward the requirement information of the UE to the Al server, the TRP may forward some or all of the requirement information of the UE to the Al server. That is, the TRP may screen the requirement information reported by the UE.

S2 is an optional step and is not necessarily executed.

At S3, the Al server analyzes the requirement information sent by the UE, and then sends information of a functional module (s) applicable to the UE to the UE. Specifically, the information may be forwarded by the TRP or directly sent to the UE.

The functional module information may include at least one of the following: an index of the functional module, storage location information, version information of the module.

For one functional module, different versions may be sent to allow the UE to select a version suitable for itself.

At S3a, the TRP may first download the functional module sent by the Al server to the UE for use in subsequent communication with the UE. Alternatively, the TRP may wait to download from the Al server in S6, which is not limited in the embodiment of the present invention.

At S4, in the case that the TRP forwards the functional module (s) sent by the Al server to the UE, the TRP may select some or all of the functional modules and forward same to the UE. That is, the TRP may perform one-time screening.

At S5, the UE downloads the corresponding functional module, and sends indication information that the functional module has been available.

In the case that the UE only uses some of the functional modules, the indication information of the corresponding module may be sent to the TRP or the Al server.

The indication information includes: an index of the functional module, storage location information, and version information of the module.

At S6, the TRP downloads the functional module used by the UE from the Al server. The functional module used by the UE is indicated by the indication information in S5.

Optional embodiment 2: UE triggers configurations of a functional module, and a version of the functional module does not match functions of the UE.

In the embodiment of the present invention, a wireless communication system has three components, namely, a terminal (UE), a TRP, and an Al server. The TRP and the Al server may be located in the same entity or in different entities, respectively.

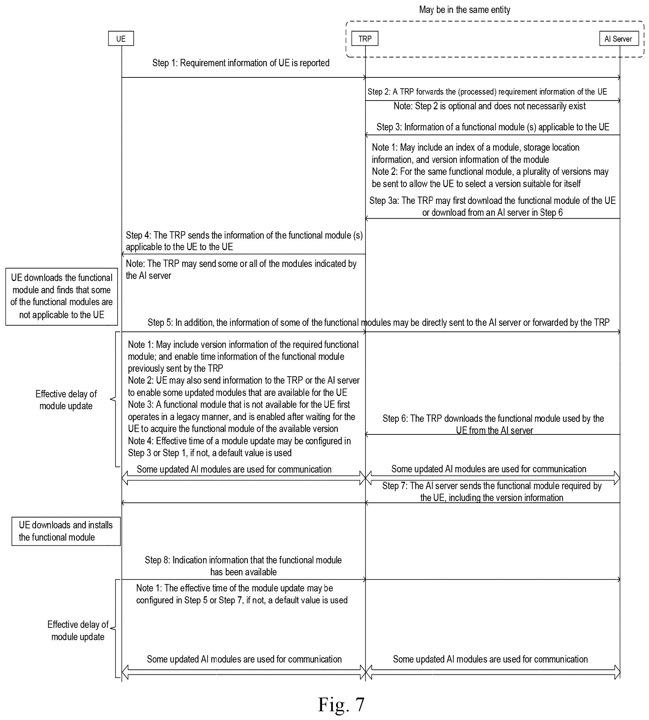

Fig. 7 is a schematic flowchart according to an optional embodiment 2 of the present invention, as shown in Fig. 7, the method includes the following steps.

At S1, requirement information of UE is reported and may be directly sent to an Al server, or forwarded to the Al server by a TRP. The requirement information includes at least one of the following:
location distribution information of the terminal; type information of the terminal; basic information of the terminal, specifically including hardware and software composition information of the terminal; communication configuration information supported by the terminal, specifically including: communication frequency domain resource information; frame structure information; transmitting power information; supported wireless communication protocol information; supported channel coding information; supported source coding information; a supported MIMO processing manner; a supported receiver detection algorithm, and the like; a peak transmission rate requirement of a data transmission requirement; a transmission delay requirement of the data transmission requirement; a service type of the data transmission requirement; and a transmission time distribution of the data transmission requirement.

At S2, in the case that the TRP needs to forward the requirement information of the UE to the Al server, the TRP may forward some or all of the requirement information of the UE to the Al server. That is, the TRP may screen the requirement information reported by the UE.

S2 is an optional step and is not necessarily executed.

At S3, the Al server analyzes the requirement information sent by the UE, and then sends information of a functional module (s) applicable to the UE to the UE. The information may be forwarded by the TRP or directly sent to the UE.

The functional module information may include at least one of the following: an index of the functional module, storage location information, version information of the module.

For one functional module, different versions may be sent to allow the UE to select a version suitable for itself.

At S3a, the TRP may first download the functional module sent by the Al server to the UE for use in subsequent communication with the UE. Alternatively, the TRP waits to download from the Al server in S6.

At S4, in the case that the TRP forwards the functional module (s) sent by the Al server to the UE, the TRP may select some or all of the functional modules and forward same to the UE. That is, the TRP may perform one-time screening.

At S5, the UE downloads the functional module and finds that some of the functional modules are not applicable to the UE. Then, the UE requests the functional module suitable for the UE and sends the request information to the Al server or the request information is forwarded by the TRP.

The request information includes at least one of the following:
version information of a required functional module;
available functional module information received by the UE; and
enable time information of the available functional module received by the UE. Optionally, the UE may also send through an independent message, not necessarily in the request information.

The functional module that is not available for the UE first operates in a legacy manner. After the UE acquires the functional module of the available version, a legacy operating manner is replaced. The legacy in the implementation of the present invention refers to an operating manner supported/pre-stored/default stored/default supported by the UE, and the operating manner may realize some or all of the functions of the functional module.

The effective time of the functional module may be configured in S3 or in S1, and if not, a default value is used.

Further, when the effective time of the functional module arrives, the UE uses the functional module to communicate with the TRP.

At S6, the TRP downloads the currently available functional module of the UE from the AI server.

At S7, after receiving the request information sent by the UE, the Al server sends the functional module required by the UE to the UE. Further, the UE receives and installs the functional module.

At S8, the UE sends the indication information that the functional module has been available received in S7 to the TRP or the Al server.

The effective time of the functional module in S7 may be configured in S5 or in S7, and if not, a default value is used.

Further, when the effective time of the functional module arrives, the UE replaces the legacy operating manner with the functional module received in S7 and communicates with the TRP.

Optional embodiment 3: an Al server triggers configurations of a functional module or update of the functional module.

In the solution, a wireless communication system has three components, namely, a terminal (UE), a TRP, and the Al server. The TRP and the Al server may be located in the same entity or in different entities, respectively.

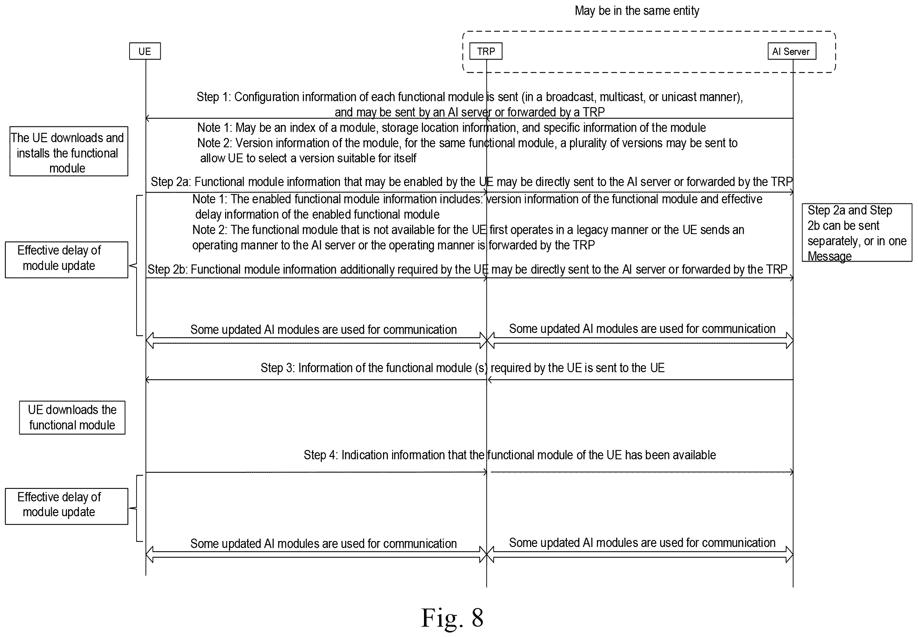

Fig. 8 is a schematic flowchart according to an optional embodiment 3 of the present invention, as shown in Fig. 8, the method includes the following steps.

At S1, configuration information of each functional module is sent, which may be sent by an Al server or forwarded by a TRP.

The configuration information may be an index of the module, or storage location information, or a specific function of the module.

One functional module may send different versions to allow the UE to select the functional module suitable for its own version.

At S2a, the UE downloads the functional module according to the configuration information of the functional module. The UE directly sends available functional module information to the Al server or the available functional module information is forwarded by the TRP.

The available functional module information includes: version information of the functional module, and effective time information of the available functional module.

The functional module that is not available for the UE first operates in a legacy manner or the UE first operates according to the functional module of the locally stored version. Further, the UE needs to send the legacy manner or the functional module information of the version used by the UE to the Al server, which is forwarded by the TRP. The legacy manner may be understood as an operating manner supported/pre-stored/default stored/default supported by the UE, and the operating manner may realize some or all of the functions of the functional module.

At S2b, the UE sends additional required functional module information, which may be directly sent to the Al server or forwarded by the TRP.

S2a and S2b may perform sending separately or in one message.

The UE and the TRP first performs communication based on some available functional modules. The functional module that is not available for the UE first operates in a legacy manner or is replaced with the functional module of the currently available version of the UE.

At S3, the Al server or the TRP sends information of the required functional module (s) to the UE, which may further include the effective time information of the functional module.

At S4, the UE sends downloads the functional module, and sends indication information that the functional module has been available to the TRP or the Al server. The indication information may further include the effective time information of the functional module.

Further, when the effective time of the functional module arrives, the UE replaces the legacy operating manner with the functional module received in S3 and communicates with the TRP.

Optional embodiment 4: UE triggers update of a functional module.

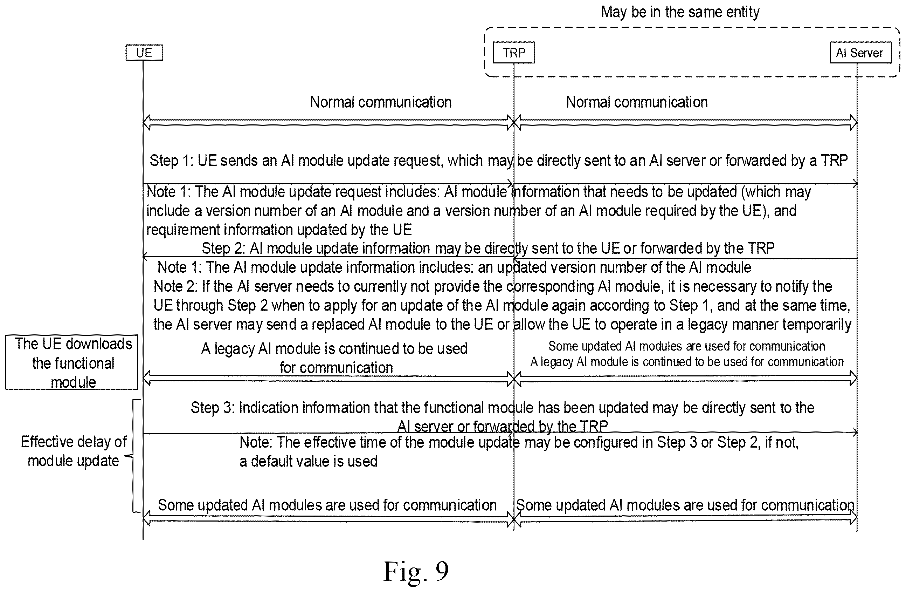

Fig. 9 is a schematic flowchart according to an optional embodiment 4 of the present invention, as shown in Fig. 9, the method includes the following steps.

At S1, the UE sends a functional module update request, which may be directly sent to an Al server or forwarded by a TRP.

The update request includes at least one of the following:
functional module information that needs to be updated, which may specifically include: a version number of a currently used functional module, and/or a version number of a functional module required by the UE; and
requirement information updated by the UE.

At S2, the Al server sends the functional module update information to the UE. The update information may be directly sent to the UE or forwarded by the TRP.

In the case that the Al server cannot currently provide the functional module required by the UE (that is, there is no corresponding functional module, or the version is not what the UE needs), it is necessary to notify the UE again of request for time or interval information of the functional module according to S1 through S2, in order to give the Al server a time to prepare the functional module required by the UE. Further, the Al server may send the available functional module of the UE to the UE or allow the UE to operate in a legacy manner temporarily.

The UE and the TRP continue to communicate using a legacy functional module or in a legacy manner.

At S3, after downloading the updated functional module, the UE sends indication information that the functional module has been updated to the Al server, which may be directly sent to the Al server or forwarded by the TRP.

When the effective time of the updated functional module arrives, the UE communicates with the TRP by using the updated functional module.

The effective time of the functional module may be configured in S3 or in S2, and if not, a default value is used.

In addition, in the solution, the operation that "the UE downloads the updated functional module" in S3 includes the following manners.

Manner 1: the UE may directly download the updated functional module.

Manner 2: the UE updates the functional module, and the UE deletes a legacy functional module that implements the same function as the updated functional module.

Manner 3: in the case that the local storage space of the UE is insufficient to download the updated module, some local functional modules (a legacy module that does not affect the normal communication of the UE) may be deleted first, and after completing the update of the module, the UE determines whether to download the previously deleted legacy functional module from the Al server according to the local storage space of the UE.

Further, in the case that the last storage space of the UE in Option 3 is not sufficient to download the legacy functional module, the TRP or the Al server needs to be notified of the information.

Optional embodiment 5: UE triggers a functional module update process, and the amount of functional module updates is large.

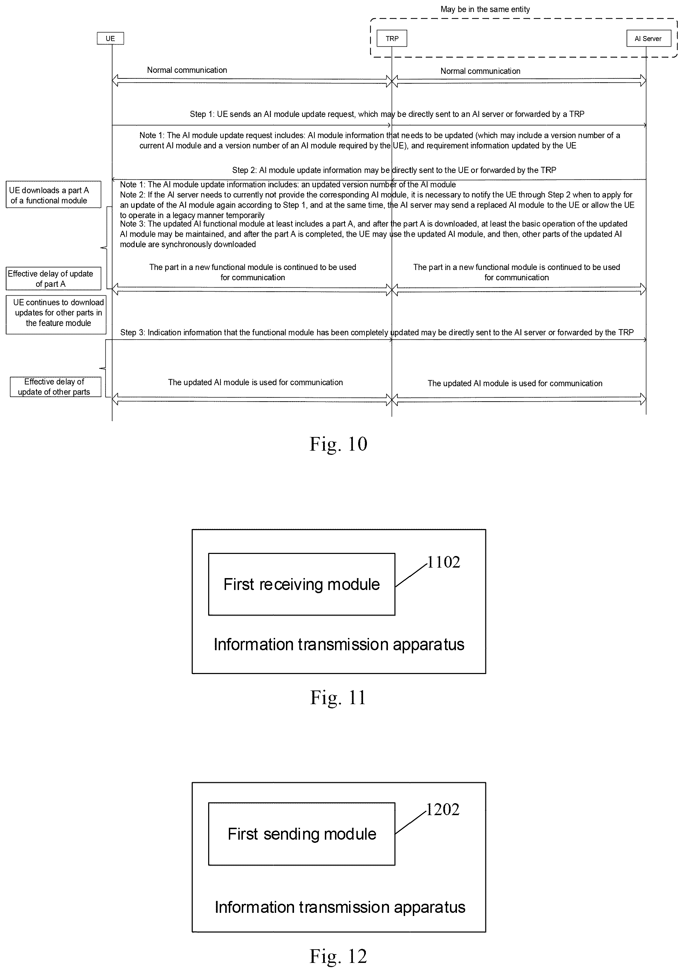

Fig. 10 is a schematic flowchart according to an optional embodiment 5 of the present invention, as shown in Fig. 10, the method includes the following steps.

At S1, the UE sends a functional module update request, which may be directly sent to an Al server or forwarded by a TRP.

The update request includes at least one of the following:
functional module information that needs to be updated, which specifically includes: a version number of a currently used functional module, and/or a version number of a functional module required by the UE; and
requirement information updated by the UE.

At S2, the Al server sends the functional module update information to the UE. The update information may be directly sent to the UE or forwarded by the TRP.

In the case that the Al server cannot currently provide the functional module required by the UE (that is, there is no corresponding functional module, or the version is not what the UE needs), it is necessary to notify the UE again of request for time or interval information of the functional module according to S1 through S2, in order to give the Al server a time to prepare the functional module required by the UE. Further, the Al server may send the available functional module of the UE to the UE or allow the UE to operate in a legacy manner temporarily.

A part of the updated functional module sent by the Al server to the UE is recorded as a part A. After downloading the part A, at least the updated functional module may be used to communicate with the TRP.

After downloading and installing the part A, the UE may communicate with the TRP by using the updated functional module.

The UE continues to download and update other parts of the functional module except the part A.

At S3, when all the functional modules have been updated, the UE sends the corresponding indication information, which may be directly sent to the Al server or forwarded by the TRP.

The UE and the TRP communicate using the updated functional module.

Through the above description of implementations, those skilled in the art may clearly know that the method according to the above embodiments may be implemented by means of software plus a necessary common hardware platform, certainly by means of hardware; but in many cases, the former is the better implementation. Based on such understanding, the technical solution of the present invention substantially or the part making a contribution to the conventional art can be embodied in the form of a software product. The computer software product is stored in a storage medium (such as a Read-Only Memory (ROM)/RAM, a magnetic disk, and a compact disc), including a number of instructions for causing a terminal device (which may be a mobile phone, a computer, a server, or a network device, etc.) to perform the methods described in various embodiments of the present invention.

The embodiments further provide an information transmission apparatus, which is configured to implement the above embodiments and preferred implementations. The embodiments and preferred implementations that have been elaborated will not be repeated here. The term "module" used below can realize a combination of software and/or hardware with an intended function. Although the device described in the following embodiment is preferably realized by software, but by hardware or a combination of software and hardware is also possible and conceived.

Fig. 11 is a structural block diagram of an information transmission apparatus according to an embodiment of the present invention, as shown in Fig. 11, the apparatus includes:
The first receiving module 1102 is configured to receive first functional module information. The first functional module information includes at least one of the following: an index of a functional module, storage location information of the functional module, version information of the functional module, and specific information of the functional module.

It is to be noted that the specific information of the functional module includes: information that may directly construct the functional module through the specific information.

Through the present invention, the first functional module information is received. The first functional module information includes at least one of the following: the index of the functional module, the storage location information of the functional module, the version information of the functional module, and the specific information of the functional module. By adopting the above technical solution, the first node may receive the functional module information. By adopting the above technical solution, the problem in the related art that a solution of how the first node (for example, the terminal) acquires the functional module information has not yet been proposed is solved. Then, the first node acquires the functional module information through interaction with a second node or a third node.

It is to be noted that in the embodiment of the present invention and the following embodiments, the first node may be understood as the terminal, and the second node may be understood as a TRP. (1) The third node and the second node may be in the same entity, or in different entities.

(2) The third node may correspond to a plurality of second nodes, that is, the third node may exchange information with the plurality of second nodes.

(3) The third node may be an Al server, or an Al storage device, or a node having a database/server/storage function.

After receiving requirement information, the second node or the third node needs to analyze the requirement information to determine the requirement of the first node, and then send the functional module information applicable to the first node to the first node.

The embodiments of the present invention further provide an optional implementation. The first receiving module is further configured to send the requirement information to the third node; and receive the first functional module information applicable to the first node sent by the third node or the second node.

In an embodiment, the requirement information includes at least one of the following: location distribution information of the first node; type information of the first node; basic information of the first node; communication configuration information supported by the first node; a peak transmission rate requirement of a data transmission requirement; a transmission delay requirement of the data transmission requirement; a service type of the data transmission requirement; a transmission time distribution of the data transmission requirement, where the basic information of the first node may specifically include hardware and software composition information of the terminal in the embodiment of the present invention; and required first functional module information. The required first functional module information includes at least one of the following: an index of a required functional module, storage location information of the required functional module, version information of the required functional module, and specific information of the functional module.

In an embodiment, the first receiving module is further configured to execute at least one of the following steps: directly sending the requirement information to the third node; and sending the requirement information to the second node, and sending the requirement information to the third node through the second node.

In an embodiment, in the process of sending the requirement information to the TRP and sending the requirement information to the Al server through the TRP, the first receiving module is further configured to send part of the requirement information; and modify (or update), by the TRP, some or all of the requirement information, and send the modified (updated) requirement information to the Al server. In the case that only part of the requirement information is modified (or updated), part of the requirement information that is not modified (or updated) is also sent to the Al server.

In an embodiment, the first receiving module is further configured to implement communication between the second node and the first node through the functional module of the first node downloaded by the second node from the third node.

In an embodiment, the first functional module information applicable to the first node includes at least one of the following: an index of at least one functional module applicable to the first node; storage location information of at least one functional module applicable to the first node; and version information of at least one functional module applicable to the first node.

Optionally, the TRP re-selects the functional module information applicable to the terminal selected by the Al server, and selects one or more functional module information applicable to the terminal to be sent to the terminal.

In an embodiment, after receiving the first functional module information applicable to the first node sent by the third node or the second node, the apparatus further includes: a fourth sending module, configured to send first indication information to the third node or the second node. The first indication information includes at least one of the following: first functional module information used by the first node. The first functional module information used by the first node may include some or all of the first functional module information applicable to the first node sent by the third node or the second node; and enable time information of the functional module used by the first node.

In an embodiment, the first receiving module is further configured to download, by the second node, the functional module used by the first node from the third node in a case where the second node receives the first indication information.

In an embodiment, the fourth sending module is configured to send, in a case where the first node determines that the downloaded functional module is not applicable to the first node, request information to the second node or the third node to request the functional module applicable to the first node. The request information includes at least one of the following: functional module information required by the first node; available functional module information received by the first node; and enable time information of the available functional module received by the first node.

In an embodiment, the fourth sending module is further configured to execute at least one of the following steps: downloading the functional module according to the received first functional module information; and sending functional module information used by the first node to the third node or the second node. The functional module information used by the first node includes at least one of the following: version information of the functional module, index information of the functional module, and effective time information of the functional module.

In an embodiment, the fourth sending module is further configured to send fourth functional module requirement information to the third node or the second node; and receive the functional module information indicated by the fourth functional module requirement information sent by the third node or the second node.

Fig. 12 is another structural block diagram of an information transmission apparatus according to an embodiment of the present invention, as shown in Fig. 12, the apparatus includes:
The first sending module 1202 is configured to send a functional module update request to a third node or a second node. The functional module update request includes at least one of the following: functional module information that needs to be updated; and requirement information updated by a first node.

Through the present invention, the functional module update request is sent to the third node or the second node. The functional module update request includes at least one of the following: the functional module information that needs to be updated; and the requirement information updated by the first node. By adopting the above technical solution, the problem that the second node or the third node cannot know the functional module that needs to be updated of the first node in the related art is solved. Then, through interaction with the second node or the third node, the functional module update request is sent to the second node or the third node.

In an embodiment, after the functional module update request is sent to the third node or the second node, the apparatus further includes: a second receiving module, configured to execute at least one of the following steps: receiving functional module update information sent by the second node or the third node; and downloading an updated functional module according to the functional module update information.

In an embodiment, after downloading the updated functional module according to the functional module update information, the first sending module 1202 is further configured to send indication information that the functional module has been updated to the third node or the second node.

In an embodiment, the first sending module 1202 is configured to execute at least one of the following steps: directly downloading the updated functional module according to the functional module update information; updating the functional module according to the functional module update information, and deleting a legacy functional module that implements the same function as the updated functional module; and in the case that the local storage space of the first node is insufficient to download the updated module, deleting some other modules in the local storage space first, and after the module of the first node is updated, determining whether to download the previously deleted legacy functional module from the third node according to whether the local storage space of the first node is sufficient.

In an embodiment, after the functional module update request is sent to the third node or the second node, the apparatus further includes: a second receiving module, further configured to receive some updated functional modules sent by the third node; and communicate, after some of the functional modules are downloaded, with the second node according to some of the functional modules, and continue to download the functional module in the updated functional modules other than some updated functional modules.

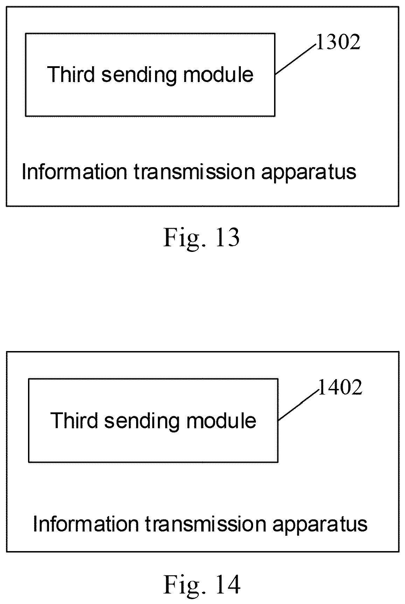

Fig. 13 is still another structural block diagram of an information transmission apparatus according to an embodiment of the present invention, as shown in Fig. 13, the apparatus includes:
The second sending module 1302 is configured to send second functional module information. The second functional module information includes at least one of the following: update information relative to a reference functional module, and reference functional module information.

The reference functional module information includes at least one of the following: index information of the reference functional module, version information of the reference functional module, and storage location information of the reference functional module.

Through the present invention, the second functional module information is sent. The second functional module information includes at least one of the following: the update information relative to the reference functional module, and the reference functional module information. The reference functional module information includes at least one of the following: the index information of the reference functional module, the version information of the reference functional module, and the storage location information of the reference functional module. By adopting the above technical solution, the problem that a second node or a third node cannot know the second functional module information in the related art is solved. Then, through interaction with the second node or the third node, the functional module information is sent to the second node or the third node.

In an embodiment, the reference functional module is a functional module stored in the third node or the second node; or, the reference functional module is a functional module sent by a first node to the third node or the second node.

In an embodiment, when the reference functional module information is the index information of the reference functional module and/or the version information of the reference functional module, the reference functional module is a functional module pre-stored in an Al server or a TRP.

In an embodiment, when the reference functional module information includes the storage location information of the reference functional module, the Al server or the TRP needs to download the corresponding reference functional module at a storage location.

In an embodiment, when the reference functional module information includes the storage location information of the reference functional module, it may further include the index information of the reference functional module and/or the version information of the reference functional module. The Al server or the TRP needs to download the reference functional module corresponding to the index information of the reference functional module and/or the version information of the reference functional module at the storage location.

In an embodiment, the first node is a first-type terminal, and the first-type terminal includes at least one of the following: a terminal registered, authorized, or authenticated in the third node or the second node; and a terminal that is allowed to send the functional module information by the third node or the second node.

In an embodiment, after sending the second functional module information, the second sending module 1302 is further configured to store or update, by the third node or the second node, the functional module locally after the third node or the second node acquires the functional module according to the functional module information.

Fig. 14 is still another structural block diagram of an information transmission apparatus according to an embodiment of the present invention, as shown in Fig. 14, the apparatus includes:
The third sending module 1402 is configured to send at least one piece of third functional module information. The third functional module information includes at least one of the following: a function implemented by a functional module; input information required by the functional module; output information of the functional module; and information on whether the functional module is enabled.

Through the present invention, the first node sends at least one piece of the third functional module information. The third functional module information includes at least one of the following: the function implemented by the functional module; the input information required by the functional module; the output information of the functional module; and the information on whether the functional module is enabled. By adopting the above technical solution, the problem that a second node or a third node cannot know the third functional module information in the related art is solved. Then, through interaction with the second node or the third node, the functional module information is sent to the second node or the third node.

In an embodiment, the first node is a second-type terminal, and the second-type terminal includes at least one of the following: a terminal registered, authorized, or authenticated in the third node or the second node; and a terminal that is allowed to send the functional module information by the third node or the second node.

In an embodiment, the terminal 1 is a terminal registered/authorized/authenticated in the Al server or the TRP. At the same time, the terminal 1 stores four sets of models of uplink data channel functional modules, numbered as models 1, 2, 3 and 4, respectively, corresponding to different performance indicators, as shown in Table 1 below.

**Table 1**

| Model number | Data Rate | Jamming intensity to neighboring cell | Power consumption |
|---|---|---|---|
| Model 1 | Low | Low | Low |
| Model 2 | Medium | Low | Low |
| Model 3 | High | Medium | Medium |
| Model 4 | Extremely high | Medium | High |

The terminal 1 reports the performance indicators of the above four models, the input information that needs to be provided by the Al server or the TRP, and the output information that can be provided by each model to the Al server or the TRP. The Al server or the TRP selects one model from the four models as the model of the uplink data channel functional module. In this embodiment, the model 2 is selected, and the Al server or the TRP notifies the terminal 1 of the selection of the model 2. After receiving this information, the terminal 1 uses the model 2 as the model of the uplink data channel functional module to send uplink data.

In an embodiment, the first node converts the functional module in a non-enabled state to an enabled state when a first condition is satisfied, and the first condition includes at least one of the following: information sent by the third node or the second node for requesting the terminal to enable the functional module is received; and the functional module information sent by the first node includes a condition enabling the functional module, and the current moment satisfies the enabling condition.

In an embodiment, the terminal 1 is a terminal registered/authorized/authenticated in the Al server or the TRP. At the same time, the terminal 1 stores four sets of models of uplink data channel functional modules, numbered as models, 1, 2, 3 and 4, respectively, corresponding to different performance indicators as shown in Table below.

| Model number | Data Rate | Jamming intensity to neighboring cell | Power consumption | Enable or not |
|---|---|---|---|---|
| Model 1 | Low | Low | Low | Yes |
| Model 2 | Medium | Low | Low | Yes |
| Model 3 | High | Medium | Medium | Yes |
| Model 4 | Extremely high | Medium | High | No |

The terminal 1 reports the performance indicators of the above four models, the input information that needs to be provided by the Al server or the TRP, and the output information that can be provided by each model to the Al server or the TRP. The Al server or the TRP selects one model from the three enabled models as the model of the uplink data channel functional module. In this embodiment, the model 2 is selected, and the Al server or the TRP notifies the terminal 1 of the selection of the model 2. After receiving this information, the terminal 1 uses the model 2 as the model of the uplink data channel functional module to send the uplink data.

When the number of terminals in a network increases and uplink channel resources are tight, the Al server or the TRP sends the request information to the terminal 1 to request to enable the model 4. After receiving the request information, the terminal 1 enables the model 4 and sends indication information of enabling the model 4 to the Al server or the TRP. After receiving the indication information, the Al server or the TRP provides input parameters for the terminal 1 based on input parameters required by the model 4, and then the terminal 1 sends the uplink data according to the model 4.

In an embodiment, at least one piece of the functional module information sent by the first node corresponds to some of the functional modules supported by the first node.

In an embodiment, the first node sends the third functional module information to the third node or the second node when a second condition is satisfied. The second condition includes at least one of the following.

Request information sent by the third node or the second node is received, and the first node has a functional module that satisfies the requirement of the request information in the functional modules not sent to the third node or the second node.

In an embodiment, the terminal 1 is a terminal registered/authorized/authenticated in the Al server or the TRP. At the same time, the terminal 1 stores four sets of models of uplink data channel functional modules, numbered as models, 1, 2, 3 and 4, respectively, corresponding to different performance indicators as shown in Table below.

| Model number | Data Rate | Jamming intensity to neighboring cell | Power consumption | Enable or not |
|---|---|---|---|---|
| Model 1 | Low | Low | Low | Yes |
| Model 2 | Medium | Low | Low | Yes |
| Model 3 | High | Medium | Medium | Yes |
| Model 4 | Extremely high | Medium | High | Yes |

The terminal 1 reports performance indicators of the models 1, 2 and 3, the input information that needs to be provided by the Al server or the TRP, and the output information that can be provided by each model to the Al server or the TRP. The Al server or the TRP selects one model from the three enabled models as the model of the uplink data channel functional module. In this embodiment, the model 2 is selected, and the Al server or the TRP notifies the terminal 1 of the selection of the model 2. After receiving this information, the terminal 1 uses the model 2 as the model of the uplink data channel functional module to send the uplink data.

When the number of terminals in the network increases and the uplink channel resources are tight, the Al server or the TRP sends the request information. The request information includes: a need to support an extremely high data transmission rate; and a medium-level jamming intensity to a neighboring cell.

After receiving the request information, the terminal 1 reports the performance indicators of the model 4, the input information that needs to be provided by the Al server or the TRP, and the output information that can be provided by each model to the Al server or the TRP. After receiving the information sent by the terminal 1, the Al server or the TRP notifies the terminal 1 that the model 4 is enabled and provides input parameters required by the model 4 for the terminal 1, and then the terminal 1 sends the uplink data according to the model 4.

It is to be noted that, each of the above modules may be realized by software or hardware. For the latter, the each of the above modules may be realized by, but not limited to, the following way: all of the above modules are in the same processor; or, the above modules are respectively in different processors in form of any combination.

The embodiments of the present invention further provide a computer-readable storage medium, in which a computer program is stored. The computer program is configured to execute, when running, the steps of any of the above method embodiments.

In an exemplary embodiment, the computer-readable storage medium may include, but are not limited to, a USB flash disk, an ROM, an RAM, a mobile hard disk, a magnetic disk, a compact disc, and other media capable of storing the computer program.

The embodiments of the present invention further provide an electronic device, which includes a memory and a processor. The memory stores a computer program. The processor is configured to run the computer program to execute the steps of any of the above method embodiments.

In an exemplary embodiment, the electronic device may further include a transmission device and an input/output device. The transmission device is connected with the processor, and the input/output device is connected with the processor.

The specific examples in this embodiment may refer to the above embodiments and the examples described in the optional implementations, which will not be elaborated herein.

It is apparent that those skilled in the art should appreciate that the above modules and steps of the present invention may be implemented by a general-purpose computing device, and they may be centralized in a single computing device or distributed on a network composed of multiple computing devices; they may be implemented by a program code which is capable of being executed by the computing device, so that they may be stored in a storage device and executed by the computing device; and in some situations, the presented or described steps may be executed in an order different from that described here; or they are made into integrated circuit modules, respectively; or multiple modules and steps of them are made into a single integrated circuit module to realize. Therefore, the present invention is not limited to any particular combination of hardware and software.

The above are only the preferred embodiments of the present invention and are not intended to limit the present invention. For those skilled in the art, the present invention may have various modifications and variations. Any modifications, equivalent replacements, improvements and the like made within the principle of the present invention shall fall within the scope of protection of the present invention.

## Claims

1. An information transmission method, comprising:
receiving first functional module information, wherein the first functional module information comprises at least one of the following: an index of a functional module, storage location information of the functional module, version information of the functional module, and specific information of the functional module.

2. The method according to claim 1, wherein receiving first functional module information comprises:
sending requirement information to a third node; and
receiving the first functional module information applicable to a first node sent by the third node or a second node.

3. The method according to claim 2, wherein the method further comprises: the requirement information comprises at least one of the following:
location distribution information of the first node;
type information of the first node;
basic information of the first node;
communication configuration information supported by the first node;
a peak transmission rate requirement of a data transmission requirement;
a transmission delay requirement of the data transmission requirement;
a service type of the data transmission requirement;
a transmission time distribution of the data transmission requirement; and
required first functional module information, wherein the required first functional module information comprises at least one of the following: an index of a required functional module, storage location information of the required functional module, version information of the required functional module, and specific information of the functional module.

4. The method according to claim 2, wherein sending requirement information to a third node comprises at least one of the following:
directly sending the requirement information to the third node; and
sending the requirement information to the second node, and sending the requirement information to the third node through the second node.

5. The method according to claim 2, wherein the method further comprising:
implementing communication between the second node and the first node through the functional module of the first node downloaded by the second node from the third node.

6. The method according to claim 2, wherein,
the first functional module information applicable to the first node comprises at least one of the following:
an index of at least one functional module applicable to the first node;
storage location information of at least one functional module applicable to the first node;
version information of at least one functional module applicable to the first node; and
specific information of at least one functional module applicable to the first node.

7. The method according to claim 2, wherein after receiving the first functional module information applicable to the first node sent by the third node or the second node, the method further comprises:
sending first indication information to the third node or the second node, wherein the first indication information comprises at least one of the following:
first functional module information used by the first node, wherein the first functional module information used by the first node may comprise some or all of the first functional module information applicable to the first node sent by the third node or the second node; and
enable time information of the functional module used by the first node.

8. The method according to claim 7, wherein the method further comprising:
in a case where the second node receives the first indication information, downloading, by the second node, the functional module used by the first node from the third node.

9. The method according to claim 2, wherein the method further comprising:
in a case where the first node determines that the downloaded functional module is not applicable to the first node, sending request information to the second node or the third node to request the functional module applicable to the first node, wherein,
the request information comprises at least one of the following:
the first functional module information required by the first node;
the available first functional module information received by the first node; and
enable time information of the available functional module received by the first node.

10. The method according to claim 1, wherein after receiving the first functional module information, the method further comprises at least one of the following:
downloading the functional module according to the received first functional module information; and
sending functional module information used by a first node to a third node or a second node, wherein the functional module information used by the first node comprises at least one of the following: version information of the functional module, index information of the functional module, and effective time information of the functional module.

11. The method according to claim 10, wherein the method further comprising:
sending fourth functional module requirement information to the third node or the second node; and
receiving the functional module information indicated by the fourth functional module requirement information sent by the third node or the second node.

12. An information transmission method, comprising:
sending a functional module update request to a third node or a second node, wherein the functional module update request comprises at least one of the following:
functional module information that needs to be updated; and
requirement information updated by a first node.

13. The method according to claim 12, wherein after sending the functional module update request to the third node or the second node, the method further comprises at least one of the following:
receiving functional module update information sent by the second node or the third node; and
downloading an updated functional module according to the functional module update information.

14. The method according to claim 13, wherein the method further comprising:
sending indication information that the functional module has been updated to the third node or the second node.

15. The method according to claim 13, wherein the downloading an updated functional module according to the functional module update information comprises at least one of the following:
directly downloading the updated functional module according to the functional module update information;
updating the functional module according to the functional module update information, and deleting a legacy functional module that implements the same function as the updated functional module; and
in a case that the local storage space of the first node is insufficient to download the updated module, deleting some other modules in the local storage space first, and after the first node completes the update of the functional module, determining, according to the local storage space, whether to download the updated functional module according to the functional module update information.

16. The method according to claim 12, wherein after sending the functional module update request to the third node or the second node, the method further comprises:
receiving some updated functional modules sent by the third node; and
after some updated functional modules are downloaded, communicating with the second node according to some updated functional modules, and continuing to download the functional module in the updated functional modules other than some updated functional modules.

17. An information transmission method, comprising:
sending second functional module information, wherein the second functional module information comprises at least one of the following: update information relative to a reference functional module, and reference functional module information;
wherein the reference functional module information comprises at least one of the following: index information of the reference functional module, version information of the reference functional module, and storage location information of the reference functional module.

18. The method according to claim 17, wherein the reference functional module is a functional module stored in a third node or a second node; or, the reference functional module is a functional module sent by a first node to the third node or the second node.

19. The method according to claim 18, wherein the first node is a first-type terminal, and the first-type terminal comprises at least one of the following:
a terminal registered, authorized, or authenticated in the third node or the second node; and
a terminal that is allowed to send the functional module information by the third node or the second node.

20. The method according to claim 17, wherein after sending the second functional module information, the method further comprises:
after the third node or the second node acquires the functional module according to the functional module information, storing or updating, by the third node or the second node, the functional module locally.

21. An information transmission method, comprising:
sending, by a first node, at least one piece of third functional module information, wherein the third functional module information comprises at least one of the following:
a function implemented by a functional module;
input information required by the functional module;
output information of the functional module; and
information on whether the functional module is enabled.

22. The method according to claim 21, wherein the first node is a second-type terminal, and the second-type terminal comprises at least one of the following:
a terminal registered, authorized, or authenticated in a third node or a second node; and
a terminal that is allowed to send the functional module information by the third node or the second node.

23. The method according to claim 21, wherein the first node converts the functional module in a non-enabled state to an enabled state when a first condition is satisfied, and the first condition comprises at least one of the following:
information sent by the third node or the second node for requesting the terminal to enable the functional module is received; and
the functional module information sent by the first node comprises a condition enabling the functional module, and the current moment satisfies the enabling condition.

24. The method according to claim 21, wherein the at least one piece of the functional module information sent by the first node corresponds to some of the functional modules supported by the first node.

25. The method according to claim 24, wherein the first node sends the functional module information to a third node or a second node when a second condition is satisfied, wherein the second condition comprises at least one of the following:
request information sent by the third node or the second node is received, and the first node has a functional module that satisfies the requirement of the request information in the functional modules not sent to the third node or the second node.

26. An information transmission apparatus, comprising:
a first receiving module, configured to receive first functional module information, wherein the first functional module information comprises at least one of the following: an index of a functional module, storage location information of the functional module, version information of the functional module, and specific information of the functional module.

27. An information transmission apparatus, comprising:
a first sending module, configured to send a functional module update request to a third node or a second node, wherein the functional module update request comprises at least one of the following:
functional module information that needs to be updated; and
requirement information updated by a first node.

28. An information transmission apparatus, comprising:
a second sending module, configured to send second functional module information, wherein the second functional module information comprises at least one of the following: update information relative to a reference functional module, and reference functional module information;
wherein the reference functional module information comprises at least one of the following: index information of the reference functional module, version information of the reference functional module, and storage location information of the reference functional module.

29. An information transmission apparatus, comprising:
a third sending module, configured to send at least one piece of third functional module information, wherein the third functional module information comprises at least one of the following:
a function implemented by a functional module;
input information required by the functional module;
output information of the functional module; and
information on whether the functional module is enabled.

30. A computer-readable storage medium, the computer-readable storage medium storing a computer program, wherein the computer program is configured to perform, when executing, the method according to any one of claims 1 to 11, or the method according to any one of claims 12 to 16, or the method according to any one of claims 17 to 20, or the method according to any one of claims 21 to 25.

31. An electronic device, comprising a memory and a processor, wherein the memory stores a computer program, and the processor is configured to execute the computer program to perform the method according to any one of claims 1 to 11, or the method according to any one of claims 12 to 16, or the method according to any one of claims 17 to 20, or the method according to any one of claims 21 to 25.
